# EUROPEAN PATENT SPECIFICATION

(11) **EP 1 869 876 B1**
(45) Date of publication and mention of the grant of the patent: **13.04.2016**
(21) Application number: 06725741.0
(22) Date of filing: 13.04.2006
(51) Int. Cl.: H04N 5/44

(54) **HIGH-DEFINITION AND SINGLE-DEFINITION DIGITAL TELEVISION DECODER**
HOCHAUFLÖSENDER UND EINFACH AUFLÖSENDER DIGITALER FERNSEHDECODER
DECODEUR DE TELEVISION NUMERIQUE HAUTE DEFINITION ET SIMPLE DEFINITION

(30) Priority: 15.04.2005 FR 0550972
(43) Date of publication of application: 26.12.2007
(73) Proprietor: Thomson Licensing, 92130 Issy-les-Moulineaux (FR)
(72) Inventor: ABELARD, Franck, F-35230 Saint Armel (FR); GAYRARD, Didier, F-35690 Acigne (FR); REMON, Noel, F-35235 Thorigne (FR); BERTIN, Jean-Pierre, F-44290 Guemene-Penfao (FR)
(74) Representative: Le Dantec, Claude
(86) International application number: PCT/EP2006/061568
(87) International publication number: WO 2006/108866

(56) References cited:
- EP-B- 0 850 543
- GB-A- 2 266 237
- US-A1- 2004 090 556

## Description

The invention relates to a digital television decoder.

The implementation of new technologies of video compression (MPEG4-AVC), and of modulation (xDSL, DVB-S2) in integrated circuits, and the development of larger and flatter displays (LCD (acronym standing for "liquid crystal display"), PLASMA, DLPs (acronym standing for "digital light processing")) are driving the introduction and the rollout of high-definition television in the United States and in Europe.

High-definition (HD) is commonly characterized by larger images in new formats: 1920x1080 .interiaced or 1280x72d progressive.

MPEG4-AVC compression today allows the transmission of HD television programmes over terrestrial, satellite or ADSL-2+ networks by decreasing the necessary bandwidth. Thus new reception and decoding terminals are appearing in these various markets.

The presentation of HD video requires an HD display capable of displaying the images in their full resolution. Moreover, new interfaces are necessary for transrriitting the HD video from the decoder to the display. There exists for this purpose a standardized analogue interface SMPTE 300-274, also called YprPb, and DVI or HDMI digital interfaces. The YprPb interface consists of three analogue signals transmitted on three coaxial conductor cables. Digital interfaces are more recent and more sophisticated, allowing encryption of video transmitted in digital and a control communication between the two appliances, typically so that the source can request the display to activate the display from its digital input.

Digital interfaces having been introduced later on HUB displays, today there exists a stock of displays rolled out onto the heterogeneous market, compelling the decoders to be equipped with both types of interface, digital and analogue.

In order to preserve compatibility with existing single-definition (SD) equipment, decoders and displays are still equipped with traditional SD interfaces, that is to say SCART sockets in Europe.

Thus, an HD decoder exhibits a significant number of video interfaces:
- HDMI (acronym standing for "high definition multimedia interface") or DVI (acronym standing for "Digital Interface Video") in HD
- YprPb in HD
- SCART in SD with the RGB components and the CVBS composite.

Given that a single interface is used at a time, certain decoder architectures optimized for cost cannot deliver the main video signal (with the menu for controlling the decoder) other than to a single type of interface at a time: HD or SD.

On plugging the decoder into the display, the problem then arises of knowing which interface is the one activated on the decoder, and this interface is not necessarily the most obvious interface for the display in question. Once the default interface has been connected up, it will again be necessary in certain cases to reconfigure the decoder so as to use its other interface, then modify the connections so as to revert to the display of the video and of the menu for controlling the decoder on the display.

The document US2004/090556 A1 (KAMIENICKI ET AL, 13 May 2004) discloses a technique for determining a video format for a video output signal generated by a television receiver. The technique includes acquiring a preferred output format that is one of a plurality of video formats and determining an aspect ratio of a selected television signal having one of a plurality of television signal formats.

The document EP0850543B (THOMSON CONSUMER ELECTRONICS, INC., 23 January, 2002) discloses a video signal display comprising means for processing a video signal for display, the video signal being selected between two video signals respectively applied to a first input and a second input, the selection being made according to a predetermined condition wherein said first input is elected and to a second condition responsive to an external control signal wherein said second input is selected.

The invention proposes to solve at least one of the aforesaid drawbacks.

For this purpose, the invention proposes a digital television decoder comprising
- at least one first bi-directional interface with a display device intended to transmit and receive analogue data with the said display device,
- at least one second mono-directional interface with the said display device intended to transmit analogue data to the said display device.

According to the invention, the decoder comprises:
- means to detect the reception of a video stream on the first interface,
- means to switch the transmission of the data to the second interface when no video signal is received on the first interface.

The invention also relates to a digital television decoder comprising at least two interfaces of different type with a display device and able to decode data according to at least two coding formats, each interface being intended to transmit data to the said display device according to one of the said formats. According to the invention the decoder comprises
- means for detecting the interface used for connection to the display device,
- means to decode the data according to the coding format supported by the said interface.

The invention will be better understood and illustrated by means of wholly nonlimiting advantageous exemplary embodiments and modes of implementation, with reference to the appended figures in which:
- Figure 1 represents a decoder according to a preferred embodiment of the invention,
- Figure 2 represents a flowchart for operating the decoder of Figure 1.

According to the preferred embodiment described here, the interface of first type is an interface of SCART type, the interface of second type is a YprPb type interface and the interface of third type is an HDMI/DVI type interface. The decoder is a decoder able to decode high-definition and single-definition data. The display device is a television set.

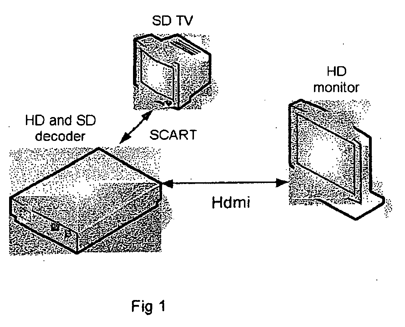

Figure 1 illustrates such a decoder.

The interface of SCART type is an interface making it possible to convey audio/video data of analogue type. This interface does not therefore allow the immediate detection of the presence of data on the interface. Thus, when a decoder is equipped with several interfaces at least one of which is of

SCART type, that is to say on which it is not possible to detect the presence of data simply, it is difficult to know which interface is the one connected to the television and consequently on which interface it is necessary to transmit the stream of audio/video data.

The decoder furthermore comprises an interface of second type of YprPb type (not represented) and an interface of third type in accordance with the HDMI or DVI standard.

The interface of SCART type makes it possible to convey audio video data in the single-definition format (SD). The HDMI interface makes it possible to convey high-definition data and the YprPb interface makes it possible to convey data in the high-definition format.

The decoder comprises means to decode if a video signal appears at the level of the SCART interface. Such means of video decoding are embodied on the basis of known components or embodied on the basis of discrete components. Thus, these components permit the detection of a connection to a television on the SCART socket.

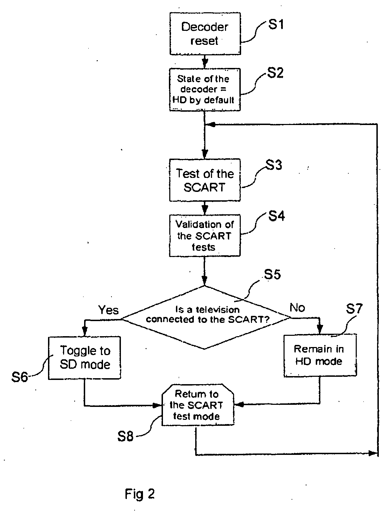

Figure 2 represents a flowchart for operating the switching of the decoder between the SCART interface and the YPrPb interface.

During a step S1, the decoder is reset to zero. This step corresponds for example to the powering-down of the decoder and to powering back up. During a step S2, the decoder is configured to decode the data in HD mode and therefore either communicate with the television by way of the HDMI interface or by way of the YprPb interface. The HMDI/DVI interface is a bi-directional interface allowing the decoder to detect the connection or nonconnection of a television. Thus, if no television is connected, then the high-definition data are transmitted on the YprPb interface.

During a step S3, the decoder, by way of the means of detection of signal on the SCART socket, looks to see whether a television is connected to the decoder via the SCART interface, also called the SCART socket, by analysing the state of the socket at the level of the analogue signal received.

During a step S4, the signals on the SCART socket are observed for a long enough time to take a decision so as to know whether the received signals are actually valid signals indicating a connection of the SCART socket.

During a step S5, in view of the state of the connection with the SCART socket, we go to a step S6 if a television is connected to the SCART socket, otherwise we go to a step S7.

During step S7, the decoder then toggles to single-definition decoding mode, data format supported by the SCART socket.

Otherwise, if no television is connected to the decoder via the SCART socket, then the decoder remains in high-definition mode.

During a step S8, we return to observation mode to observe the various interfaces.

The decoder is therefore by default in high-definition mode. According to the type of interface connected, it toggles to single-definition mode. The SCART interface, of analogue type, makes it possible to convey useful data but no control signal makes it possible to detect whether the socket is actually connected to a television. It is thus necessary to be able to detect whether a television is actually connected to this socket.

Thus the invention allows a data decoder at one and the same time single-definition and high-definition to operate with interfaces of .different nature, avoiding manipulations and configurations of the decoder for the user. During power-up, the decoder will automatically be able to recognize which mode it must operate in (HD or SD) as a function of the type of interface connected. This automatic recognition is transparent to the user. The user then displays the data in the high-definition or single-definition format automatically as a function of the type of display that he has connected to his decoder.

The table below shows the various configurations of the decoder as a function of the interface connected.

| Hdmi Device | TV (SCART) '. | Hdmi Output | YprPb Output | SCART Output | Configuration of the decoder |
|---|---|---|---|---|---|
| Not Present | Not Present | No | Yes | No | HD (YPrPb) |
| Not Present | Present | No | No | Yes | SD(SCART) |
| Present | Not Present | Yes . | No | No | HD (hdmi) . |
| Present | Present | Yes | No | No | HD(hdmi) |

The invention is not limited to the embodiments given.

Specifically, during step S1 of resetting to zero, it is possible to place the decoder in single-definition mode. Thereafter, if a SCART socket is connected, the decoder's video detection means situated near the SCART interface detect it and the decoder remains in single-definition mode. On the other hand if the means of video detection do not detect the presence of a SCART socket, the decoder toggles to high-definition mode and activates the YprPb interface if the HDMI interface is not connected.

By television is understood any display device.

## Claims

1. Digital television decoder comprising
- at least one first bi-directional interface with a display device intended to transmit and receive analogue data with the said display device, wherein the at least first bi-directional interface cannot detect control signal whether a display device is actually connected,
- at least one second mono-directional interface with the said display device intended to transmit analogue data to the said display device and,
- means to detect the reception of a video stream on the first interface, said digital decoder being **characterized in that** it further comprises means to switch the transmission of the data to the second interface when no video signal is received on the first interface.

2. Decoder according to Claim 1 **characterized in that** it comprises a third interface intended to receive and transmit digital data with the said display device.

3. Decoder according to Claim 2 **characterized in that** the data transmitted on the interfaces of second and third types are data in the high-definition format and the data transmitted on the interface of first type are data of single-definition type.

4. Decoder according to Claim 3 **characterized in that** it comprises means to generate data according to the high-definition format and data according to the single-definition format.

5. Decoder according to Claim 4 **characterized in that** if control data are received on the interface of third type, then the interface of third type is activated so as to allow the exchange of data between the decoder and the said display device.

6. Decoder according to Claim 5 **characterized in that** if no data item is received from the interface of third type, then if the said means of video detection detect data on the interface of first type, the interface of first type is activated so as to allow the exchange of data between the decoder and the said display device.

7. Decoder according to Claim 6 **characterized in that** if no data item is detected on the interfaces of first and of third type, then the interface of second type is activated.

8. Digital television decoder according to claim 1, and being able to decode data according to at least two coding formats, each interface being intended to transmit data to the said display device according to one of the said formats **characterized in that** it comprises:
- means for detecting the interface used for connection to the display device,
- means to decode the data according to the coding format supported by the said interface.

9. Method, in a digital television decoder, said television decoder comprising at least one first bi-directional interface with a display device intended to transmit and receive analogue data with the said display device, wherein the at least first bi-directional interface cannot detect control signal whether a display device is actually connected, and at least one second mono-directional interface with the said display device intended to transmit analogue data to the said display device, said method
- detecting the reception of a video stream on the first interface,
- switching the transmission of the data to the second interface when no video signal is received on the first interface.

10. Method according to claim 9, wherein said decoder is able to decode data according to at least two coding formats, and each interface being intended to transmit data to the said display device according to one of the said formats said method comprising:
- detecting the interface used for connection to the display device,
- decoding the data according to the coding format supported by the said interface.

11. Method according to claim 10 **characterized in that** said said decoder comprises a third interface intended to receive and transmit digital data with the said display device.

12. Method according to Claim 11 **characterized in that** the data transmitted on the interfaces of second and third types are data in the high-definition format and the data transmitted on the interface of first type are data of single-definition type.

## Patentansprüche

1. Digitalfernsehdecoder, der umfasst:
- mindestens eine erste bidirektionale Schnittstelle mit einer Anzeigevorrichtung, die dafür bestimmt ist, analoge Daten mit der Anzeigevorrichtung zu senden und zu empfangen, wobei die mindestens eine erste bidirektionale Schnittstelle ein Steuersignal, ob eine Anzeigevorrichtung tatsächlich verbunden ist, nicht detektieren kann,
- mindestens eine zweite unidirektionale Schnittstelle mit der ersten Anzeigevorrichtung, die dafür bestimmt ist, analoge Daten an die Anzeigevorrichtung zu senden, und
- Mittel zum Detektieren des Empfangs eines Videostroms an der ersten Schnittstelle, wobei der Digitaldecoder **dadurch gekennzeichnet ist, dass** er ferner Mittel umfasst, um die Sendung der Daten zu der zweiten Schnittstelle zu schalten, wenn an der ersten Schnittstelle kein Videosignal empfangen wird.

2. Decoder nach Anspruch 1, **dadurch gekennzeichnet, dass** er eine dritte Schnittstelle umfasst, die dafür bestimmt ist, digitale Daten mit der Anzeigevorrichtung zu empfangen und zu senden.

3. Decoder nach Anspruch 2, **dadurch gekennzeichnet, dass** die an den Schnittstellen vom zweiten und dritten Typ gesendeten Daten Daten in dem hochauflösenden Format sind und dass die an der Schnittstelle vom ersten Typ gesendeten Daten Daten eines niedrigauflösenden Typs sind.

4. Decoder nach Anspruch 3, **dadurch gekennzeichnet, dass** er Mittel zum Erzeugen von Daten in Übereinstimmung mit dem hochauflösenden Format und Daten in Übereinstimmung mit dem niedrigauflösenden Format umfasst.

5. Decoder nach Anspruch 4, **dadurch gekennzeichnet, dass** die Schnittstelle vom dritten Typ aktiviert wird, um den Austausch von Daten zwischen dem Decoder und der Anzeigevorrichtung zu ermöglichen, falls an der Schnittstelle Steuerdaten vom dritten Typ empfangen werden.

6. Decoder nach Anspruch 5, **dadurch gekennzeichnet, dass** die Schnittstelle vom ersten Typ aktiviert wird, um den Austausch von Daten zwischen dem Decoder und der Anzeigevorrichtung zu ermöglichen, falls die Mittel zur Videodetektion Daten an der Schnittstelle vom ersten Typ detektieren, falls keine Daten von der Schnittstelle vom dritten Typ empfangen werden.

7. Decoder nach Anspruch 6, **dadurch gekennzeichnet, dass** die Schnittstelle vom zweiten Typ aktiviert wird, falls an den Schnittstellen vom ersten und vom dritten Typ kein Datenelement detektiert wird.

8. Digitalfernsehdecoder nach Anspruch 1, der Daten in Übereinstimmung mit mindestens zwei Codierungsformaten decodieren kann, wobei jede Schnittstelle dafür bestimmt ist, Daten in Übereinstimmung mit einem der Formate an die Anzeigevorrichtung zu senden, **dadurch gekennzeichnet, dass** der Digitalfernsehdecoder umfasst:
- Mittel zum Detektieren der für die Verbindung mit der Anzeigevorrichtung verwendeten Schnittstelle,
- Mittel zum Decodieren der Daten in Übereinstimmung mit dem durch die Schnittstelle unterstützten Codierungsformat.

9. Verfahren in einem Digitalfernsehdecoder, wobei der Fernsehdecoder mindestens eine erste bidirektionale Schnittstelle mit einer Anzeigevorrichtung, die dafür bestimmt ist, analoge Daten mit der Anzeigevorrichtung zu senden und zu empfangen, wobei die mindestens eine erste bidirektionale Schnittstelle ein Steuersignal, ob eine Anzeigevorrichtung tatsächlich verbunden ist, nicht detektieren kann, und mindestens eine zweite unidirektionale Schnittstelle mit der zweiten Anzeigevorrichtung, die dafür bestimmt ist, analoge Daten an die Anzeigevorrichtung zu senden, umfasst, wobei das Verfahren:
- den Empfang eines Videostroms an der ersten Schnittstelle detektiert,
- die Sendung der Daten zu der zweiten Schnittstelle schaltet, wenn an der ersten Schnittstelle kein Videosignal empfangen wird.

10. Verfahren nach Anspruch 9, wobei der Decoder Daten in Übereinstimmung mit mindestens zwei Codierungsformaten decodieren kann und wobei jede Schnittstelle dafür bestimmt ist, Daten in Übereinstimmung mit einem der Formate an die Anzeigevorrichtung zu senden, wobei das Verfahren umfasst:
- Detektieren der für die Verbindung mit der Anzeigevorrichtung verwendeten Schnittstelle,
- Decodieren der Daten in Übereinstimmung mit dem durch die Schnittstelle unterstützten Codierungsformat.

11. Verfahren nach Anspruch 10, **dadurch gekennzeichnet, dass** der Decoder eine dritte Schnittstelle umfasst, die dafür bestimmt ist, digitale Daten mit der Anzeigevorrichtung zu empfangen und zu senden.

12. Verfahren nach Anspruch 11, **dadurch gekennzeichnet, dass** die an den Schnittstellen vom zweiten und dritten Typ gesendeten Daten im hochauflösenden Format sind und dass die an der Schnittstelle vom ersten Typ gesendeten Daten vom niedrigauflösenden Typ sind.

## Revendications

1. Décodeur de télévision numérique comprenant
- au moins une première interface bidirectionnelle avec un dispositif d'affichage conçue pour transmettre et recevoir des données analogiques audit dispositif d'affichage, dans lequel la au moins première interface bidirectionnelle ne peut pas détecter le signal de commande si un dispositif d'affichage est connecté,
- au moins une deuxième interface unidirectionnelle, avec ledit dispositif d'affichage pour transmettre des données analogiques audit dispositif d'affichage, et
- un moyen pour détecter la réception d'un flux vidéo sur la première interface, ledit décodeur numérique étant **caractérisé en ce qu'**il comprend en outre un moyen pour commuter la transmission des données sur la deuxième interface lorsqu'aucun signal vidéo n'est reçu sur la première interface.

2. Décodeur selon la revendication 1, **caractérisé en ce qu'**il comprend une troisième interface conçue pour recevoir et transmettre des données numériques avec ledit dispositif d'affichage.

3. Décodeur selon la revendication 2, **caractérisé en ce que** les données transmises sur les interfaces de deuxième et troisième type sont des données au format haute définition et les données transmises sur l'interface du premier type sont des données de simple définition.

4. Décodeur selon la revendication 3, **caractérisé en ce qu'**il comprend un moyen pour générer des données selon le format haute définition et des données selon le format simple définition.

5. Décodeur selon la revendication 4, **caractérisé en ce que** si des données de contrôle sont reçues sur l'interface de troisième type, l'interface de troisième type est activée pour permettre l'échange de données entre le décodeur et ledit dispositif d'affichage.

6. Décodeur selon la revendication 5, **caractérisé en ce que** si aucune donnée n'est reçue sur l'interface de troisième type, si ledit moyen pour détecter des données vidéo détecte des données sur l'interface de premier type, l'interface de premier type est activée pour permettre l'échange de données entre le décodeur et ledit dispositif d'affichage.

7. Décodeur selon la revendication 6, **caractérisé en ce que** si aucune donnée n'est détectée sur les interfaces de premier et troisième type, l'interface de deuxième type est activée.

8. Décodeur de télévision numérique selon la revendication 1, capable de décoder des données selon au moins deux formats de codage, chaque interface étant conçue pour transmettre des données audit dispositif d'affichage selon l'un desdits formats, **caractérisé en ce qu'**il comprend :
- un moyen pour détecter l'interface utilisée pour la connexion avec le dispositif d'affichage,
- un moyen pour décoder les données selon le format de codage pris en charge par ladite interface.

9. Procédé, dans un décodeur de télévision numérique, ledit décodeur de télévision comprenant au moins une première interface bidirectionnelle avec un dispositif d'affichage conçu pour transmettre et recevoir des données analogiques audit dispositif d'affichage, dans lequel la au moins première interface bidirectionnelle ne peut pas détecter le signal de commande si un dispositif d'affichage est connecté, et au moins une deuxième interface unidirectionnelle, avec ledit dispositif d'affichage est conçu pour transmettre des données analogiques audit dispositif d'affichage, ledit procédé
- détectant la réception d'un flux vidéo sur la première interface,
- commutant la transmission des données sur la deuxième interface lorsqu'aucun signal vidéo n'est reçu sur la première interface.

10. Procédé selon la revendication 9, dans lequel ledit décodeur peut décoder des données selon au moins deux formats de codage, chaque interface étant conçue pour transmettre des données audit dispositif d'affichage selon l'un desdits formats, ledit procédé comprenant :
- la détection de l'interface utilisée pour la connexion avec le dispositif d'affichage,
- le décodage des données selon le format de codage pris en charge par ladite interface.

11. Procédé selon la revendication 10, **caractérisé en ce que** ledit décodeur comprend une troisième interface conçue pour recevoir et transmettre des données numériques avec ledit dispositif d'affichage.

12. Procédé selon la revendication 11, **caractérisé en ce que** les données transmises sur les interfaces du deuxième et troisième type sont des données au format haute définition et les données transmises à l'interface du premier type sont des données de simple définition.
